# FASCICULE DE BREVET EUROPEEN

(11) **EP 1 300 965 B1**
(45) Date de publication et mention de la délivrance du brevet: **31.10.2007**
(21) Numéro de dépôt: 02354137.8
(22) Date de dépôt: 06.09.2002
(51) Int. Cl.: H04B 3/54, H04B 3/56

(54) **Dispositif de couplage pour un système de transmission à courant porteur à bas débit**
Vorrichtung zur Kopplung einer Stromversorgungsleitung mit niedriger Bitrate
Coupling apparatus for powerline transmission system with low bit rate

(30) Priorité: 02.10.2001 FR 0112633
(43) Date de publication de la demande: 09.04.2003
(73) Titulaire: Schneider Electric Industries SA, 92500 Rueil-Malmaison (FR)
(72) Inventeur: Beranger, Bruno, Schneider Electric Industries SAS, 38050 Grenoble Cédex 09 (FR); Cittadini, R., Schneider Electric Industries SAS, 38050 Grenoble Cédex 09 (FR); Garelli, Oleg, Schneider Electric Industries SAS, 38050 Grenoble Cédex 09 (FR)
(74) Mandataire: Tripodi, Paul

(56) Documents cités:
- EP-A- 0 967 737
- US-A- 4 370 564

## Description

L'invention concerne un dispositif de couplage pour un système de transmission à courant porteur à bas débit, comportant un circuit de contrôle, des moyens d'alimentation du circuit de contrôle par un réseau alternatif de distribution électrique et des moyens de couplage du circuit de contrôle au réseau pour l'émission et la réception d'informations modulées transmises par courant porteur sur le réseau, les moyens d'alimentation comportant un transformateur ayant un primaire connecté au réseau et un secondaire connecté au dispositif de contrôle.

Les courants porteurs à bas débit, c'est à dire pour un débit inférieur à 100 kbits/s, par exemple à 2400 bits/s, sont utilisés notamment en domotique pour la commande et/ou la surveillance d'appareils électriques par l'intermédiaire du réseau alternatif de distribution électrique (par exemple 230V et 50Hz).

Les dispositifs de couplage classiques comportent généralement une alimentation isolée destinée à fournir, à partir du réseau, la puissance électrique nécessaire aux composants du dispositif de couplage. Par ailleurs, un coupleur magnétique isolé permet l'émission et la réception d'informations modulées de l'appareil électrique vers le réseau et inversement. Pour la sécurité des personnes, aussi bien le transformateur que le coupleur magnétique doivent assurer un bon isolement galvanique entre l'appareil électrique et le réseau.

Le document EP 0967737 décrit un procédé de transmission de données sur une ligne d'alimentation alternative comprenant un découpage de la tension d'alimentation selon un codage des données à transmettre.

L'invention a pour but un dispositif de couplage dont le coût est réduit, tout en assurant un très bon isolement galvanique entre l'appareil électrique et le réseau.

Selon l'invention, ce but est atteint par le fait que les moyens d'alimentation comportent un interrupteur bidirectionnel connecté en série avec le primaire, le circuit de contrôle comportant des moyens de détection de présence d'une porteuse connectés aux bornes du secondaire, le dispositif comportant un optocoupleur contrôlant l'interrupteur bidirectionnel et un commutateur à trois positions, commandé par le circuit de contrôle, le commutateur ayant une sortie connectée à une entrée de commande de l'optocoupleur, une première entrée, connectée à une sortie d'un oscillateur, une seconde entrée, connectée à une sortie d'émission du circuit de contrôle, et une troisième entrée, connectée à une sortie, de tension continue prédéterminée, des moyens d'alimentation, la sortie du commutateur étant connectée à la première entrée en mode de veille, de manière à définir une fréquence de découpage prédéterminée des moyens d'alimentation, à la seconde entrée en mode d'émission, de manière à moduler les informations à transmettre, et à la troisième entrée en mode de réception, lorsque le circuit de contrôle a détecté la présence d'une porteuse en mode de veille.

D'autres avantages et caractéristiques ressortiront plus clairement de la description suivante d'un mode particulier de réalisation, donné à titre d'exemple non limitatif et représenté sur les dessins annexés dans lesquels :
La figure 1 illustre, sous forme de schéma-bloc, un dispositif de couplage selon l'art antérieur.
La figure 2 illustre, sous forme de schéma-bloc, un dispositif de couplage selon l'invention.
Les figures 3 à 6 représentent, sous forme schématique, les formes d'onde du courant parcourant le primaire du transformateur du dispositif de couplage selon la figure 2, respectivement en mode de veille en l'absence de transmission d'informations sur le réseau, en mode de veille lorsque des informations sont transmises par courant porteur sur le réseau, en mode de réception et en mode d'émission.
La figure 7 illustre plus en détail un mode particulier de réalisation du circuit de contrôle d'un dispositif de couplage selon la figure 2.
La figure 8 représente plus en détail un mode particulier de réalisation du filtre sélectif d'un dispositif de couplage selon la figure 2.
La figure 9 représente la courbe de réponse en fréquence du filtre sélectif selon la figure 8.
La figure 10 représente un transformateur piézoélectrique pouvant être utilisé dans le dispositif de couplage selon la figure 2.

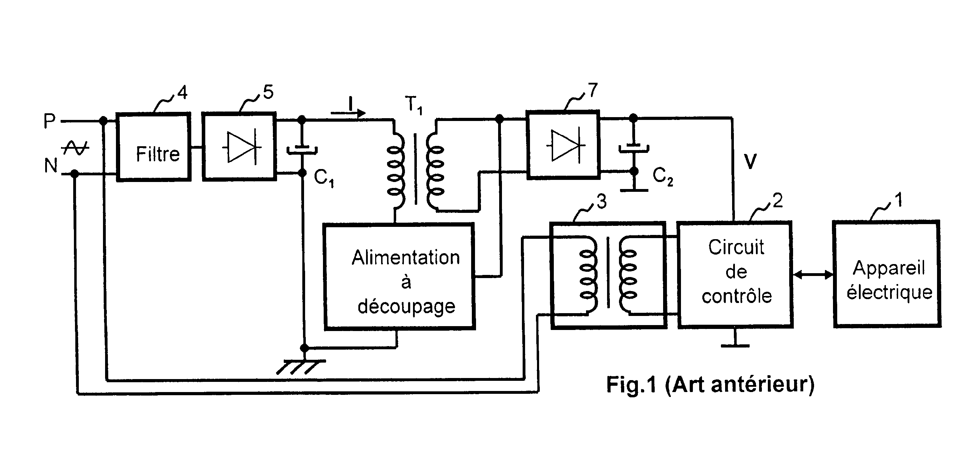

La figure 1 illustre un dispositif de couplage de type classique, permettant de coupler un appareil électrique 1 au réseau alternatif de distribution électrique (par exemple 230V, 50Hz), représenté sur la figure 1 par un conducteur de phase P et un conducteur de neutre N.

Le dispositif de couplage comporte un circuit de contrôle 2, connecté bidirectionnellement à l'appareil électrique 1. Le circuit de contrôle 2 est alimenté à partir du réseau par l'intermédiaire d'une alimentation isolée lui fournissant la tension continue nécessaire. Le circuit de contrôle 2 est également connecté au réseau par l'intermédiaire d'un coupleur magnétique isolé, constitué par un transformateur de couplage 3, de rapport 1/1 de préférence, permettant la transmission d'informations, par modulation du courant porteur, de l'appareil électrique vers le réseau, c'est à dire en émission, et du réseau vers l'appareil électrique, c'est à dire en réception.

Dans le mode de réalisation connu représenté à la figure 1, l'alimentation isolée comporte un filtre 4, connecté au réseau en amont et à un redresseur 5 en aval. Un condensateur de stockage C₁ est disposé en sortie du redresseur 5, en parallèle avec un enroulement primaire d'un transformateur d'alimentation T₁ connecté en série avec un circuit d'alimentation à découpage 6. Une entrée de commande du circuit d'alimentation à découpage est connectée à un enroulement secondaire du transformateur T₁ de manière à assurer la régulation de la tension de sortie du transformateur T₁ à une valeur prédéterminée. La tension de sortie aux bornes de l'enroulement secondaire du transformateur T₁ est, de manière classique, redressée (redresseur 7) puis appliquée aux bornes d'un condensateur de stockage C₂ qui fournit ainsi une tension continue d'alimentation V au circuit de contrôle 2.

Pour que la transmission d'informations du circuit de contrôle 2 vers le réseau par l'intermédiaire du transformateur de couplage 3 soit efficace, compte tenu de la faible impédance du réseau (1 à 10 Ohms) à la fréquence de la porteuse (132kHz par exemple), il est nécessaire que le circuit de contrôle 2 comporte un amplificateur. Celui-ci augmente la consommation du circuit de contrôle 2 en mode d'émission, ce qui rend nécessaire une alimentation assez puissante et, en conséquence, volumineuse et coûteuse. L'isolement galvanique est assuré par les transformateurs d'alimentation T₁ et de couplage 3. Le dispositif de couplage classique, avec deux transformateurs pour assurer l'isolement galvanique et un amplificateur, est relativement volumineux, complexe et coûteux.

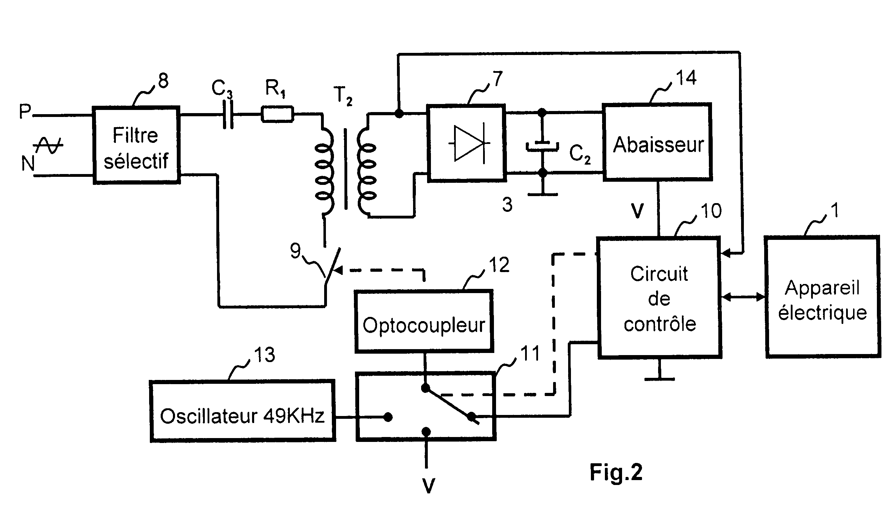

Le dispositif selon l'invention permet de réduire le coût du dispositif de couplage tout en améliorant, si nécessaire, l'isolement galvanique. Comme représenté à la figure 2, le dispositif de couplage selon l'invention permet d'éliminer le transformateur de couplage 3 et d'utiliser un transformateur T₂, de rapport 1/1, à la fois pour l'alimentation et pour la transmission des informations entre le circuit de contrôle et le réseau.

Le transformateur T₂ comporte un primaire, connecté, en série avec une résistance de limitation R₁ et un condensateur C_{3,} au réseau par l'intermédiaire d'un filtre sélectif 8. A titre d'exemples non limitatifs la résistance R₁ peut avoir une valeur voisine de 10 Ohms et le condensateur C₃ une valeur de l'ordre du microfarad. La résistance R₁ sert à limiter le courant en cas de surtensions ainsi qu'au démarrage lorsque le condensateur C₃ est déchargé. Le condensateur C₃ est destiné à réduire le courant au primaire du transformateur T₂ lorsque le dispositif fonctionne en mode de réception comme cela sera décrit plus en détail ci-dessous.

Un interrupteur bidirectionnel 9, bidirectionnel en tension et en courant, est également connecté en série avec la primaire du transformateur T₂. Il est commuté avec une fréquence de découpage différente selon que le dispositif de couplage est en mode de veille, en mode de réception ou en mode d'émission.

Un circuit de contrôle 10, connecté bidirectionnellement à l'appareil électrique 1, contrôle l'interrupteur bidirectionnel 9 par l'intermédiaire d'un commutateur 11 et d'un optocoupleur 12. Le commutateur 11 comporte une première entrée connectée à la sortie d'un oscillateur 13, une seconde entrée connectée à une sortie d'émission du circuit de contrôle 10 et une troisième entrée connectée à une sortie de tension continue prédéterminée (V sur la figure ) de l'alimentation. La sortie du commutateur 11 est connectée à une entrée de commande de l'optocoupleur 12. Le circuit de contrôle 10 contrôle la position du commutateur 11 et comporte des entrées connectées directement aux bornes du secondaire du transformateur T₂ pour lui permettre de détecter la présence d'une porteuse lorsque le dispositif est en mode de veille et recevoir les informations en mode de réception.

L'alimentation en tension continue V du circuit de contrôle 10 est fournie par le secondaire du transformateur T₂. Pour cela, la tension aux bornes du secondaire du transformateur T₂ est, comme à la figure 1, redressée par un redresseur 7, double alternance de préférence, puis appliquée aux bornes d'un condensateur de stockage C₂. Un filtre (non représenté) est, de préférence, disposé en aval du redresseur 7. Dans un mode de réalisation préférentiel, la tension aux bornes du condensateur C₂ est relativement élevée (30V environ) et un circuit abaisseur et/ou régulateur 14, de type connu, est connecté en aval aux bornes du condensateur C₂ pour fournir les tensions continues d'alimentation appropriées (5V et/ou 10V). Il est à noter que la tension appliquée à la troisième entrée du commutateur (11) peut être différente de la tension d'alimentation V du circuit de contrôle.

Le dispositif de couplage selon la figure 2 fonctionne de la manière décrite ci-dessous.

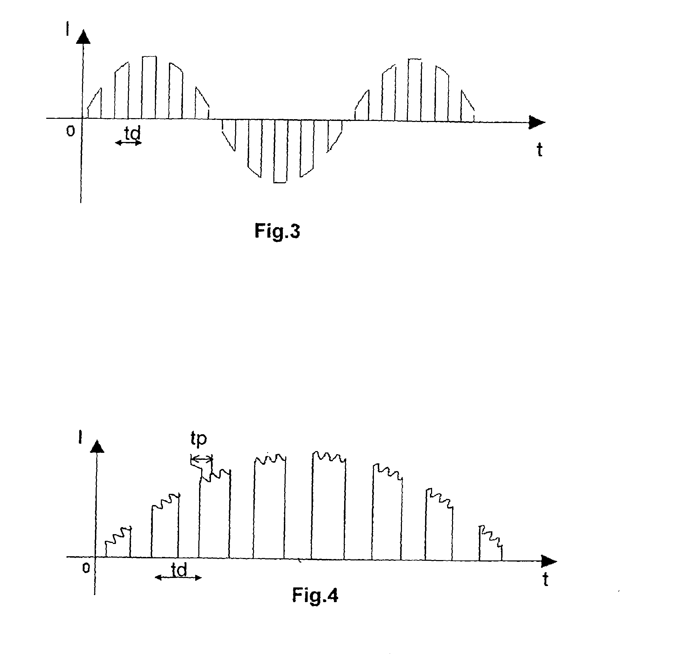

En mode de veille, c'est à dire essentiellement en l'absence de transmission d'informations, la sortie du commutateur 11 est connectée à sa première entrée, c'est à dire à la sortie de l'oscillateur 13. La fréquence de celui-ci est, dans un mode préférentiel de réalisation, de l'ordre de 49kHz. L'alimentation fonctionne alors comme un convertisseur alternatif/continu de type « FORWARD », avec une fréquence de découpage de 49kHz. Le courant I parcourant le primaire du transformateur T₂, de forme générale sinusoïdale (à 50Hz) est alors découpé à la fréquence de découpage (période de découpage td) comme représenté schématiquement à la figure 3 (sur les figures, les fréquences de découpage représentées ne sont pas à l'échelle pour une meilleure clarté des formes d'onde).

Si des informations sont transmises sur le réseau par courant porteur, le courant I est alors modulé par ces informations. Dans le mode de réalisation représenté sur les figures 4 à 6, il s'agit d'une modulation en fréquence, avec une fréquence de porteuse de 132 kHz (période de porteuse tp). La forme d'onde du courant I est alors du type représenté à la figure 4. La présence de la porteuse sur le réseau, lorsque le dispositif est en mode de veille, est détectée, par tout moyen approprié connu, par le circuit de contrôle 10 dans le signal d'alimentation découpé à 49kHz présent au secondaire du transformateur.

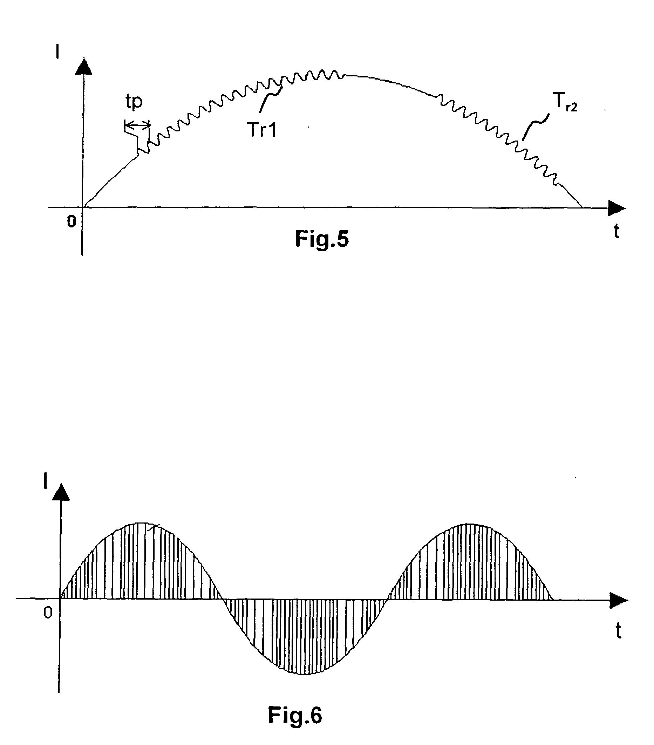

Lorsque la présence de la porteuse a été détectée, le circuit de contrôle 10 fait passer le dispositif du mode de veille au mode de réception. En mode de réception, la sortie du commutateur 11 est connectée à sa troisième entrée, c'est à dire à une tension continue, de manière à fermer l'interrupteur bidirectionnel 9. Ainsi, en mode de réception, le découpage haute fréquence est supprimé et le courant I au primaire du transformateur T2, qui n'est plus découpé, a alors la forme représentée à la figure 5 : une sinusoïde à 50kHz modulée pendant des trames Tᵣ₁ et Tᵣ₂ de transmission de données.

Le transformateur T₂ a un rapport proche de1/1 pour ne pas atténuer les signaux en mode de réception. Ceux-ci, présents au secondaire du transformateur T₂, peuvent alors être décodés et analysés par le circuit de contrôle 10 qui peut commander en conséquence l'appareil électrique 1. Le condensateur C₃, en série avec le primaire du transformateur T₂, est destiné à limiter le courant primaire lorsque, en mode de réception, l'impédance du transformateur T₂ alimenté sous 50Hz est proche du court-circuit.

En mode de réception, l'absence de découpage au primaire du transformateur T₂ permet au circuit de contrôle 10 de recueillir les données transmises sur le réseau au secondaire du transformateur T₂ avec le meilleur rapport signal/bruit possible. Cependant, ceci interrompt la charge du condensateur du stockage C₂ de l'alimentation. Pour permettre un fonctionnement correct du circuit de contrôle en mode de réception, le condensateur de stockage C₂ est dimensionné de manière à permettre, en mode de veille, le stockage de l'énergie nécessaire au dispositif pendant toute la durée du mode de réception.

A la fin de la réception, le circuit de contrôle 10 provoque le passage du dispositif de couplage soit en mode de veille, soit en mode d'émission s'il désire envoyer une réponse sur le réseau.

En mode d'émission, la sortie du commutateur 11 est connectée par le circuit de contrôle 10, avec sa seconde entrée, elle-même connectée à la sortie d'émission du circuit de contrôle 10. Le circuit de contrôle 10 envoie alors sur sa sortie d'émission des informations modulées autour de la fréquence de la porteuse (132kHz par exemple). Cette modulation de porteuse est transmise par l'optocoupleur 12 à l'interrupteur bidirectionnel 9. Ceci provoque un découpage du courant sinusoïdal primaire I à 50Hz par la porteuse modulée, comme représenté schématiquement à la figure 6. Ce découpage du primaire de l'alimentation permet, comme en mode de veille, d'alimenter le circuit de contrôle en rechargeant le condensateur de stockage C₂. Simultanément, cela induit, au primaire, une ondulation haute fréquence, contenant les informations à transmettre sur le réseau. La puissance d'émission provient alors de la consommation énergétique de l'alimentation sur le réseau. Il est alors possible de supprimer l'amplificateur du circuit de contrôle qui était nécessaire dans les dispositifs de couplage selon l'art antérieur. La suppression de cet amplificateur permet, à son tour, de réduire la consommation électrique du circuit de contrôle (moins d'1W à titre d'exemple) et, en conséquence, de réduire la puissance et la taille de l'alimentation ainsi que le coût du dispositif de couplage.

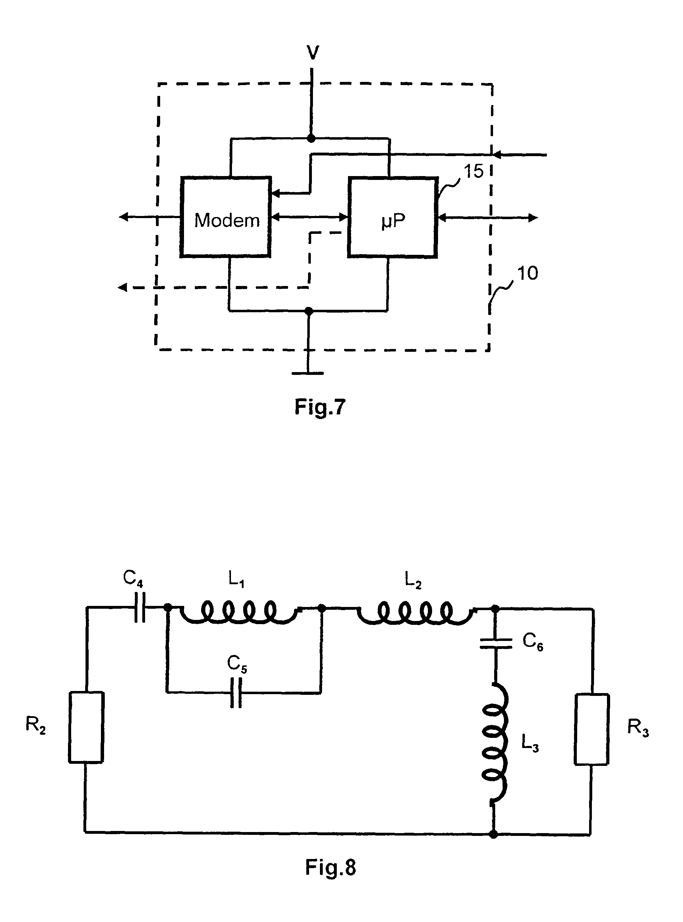

La figure 7 illustre un mode de réalisation particulier du circuit de contrôle 10. Il comporte un microprocesseur 15, connecté à l'appareil électrique 1 et à un modem 16 fournissant les informations sous forme modulée. Le microprocesseur 15 et le modem 16 sont tous deux alimentés par la tension V ou par deux tensions fournies par le circuit abaisseur 14. Le microprocesseur 15 contrôle le commutateur 11. Le modem 15 détecte la porteuse en mode de veille et démodule les informations présentes au secondaire du transformateur T₂ en mode de réception. Il communique ces informations au microprocesseur 15, qui lui transmet les informations à transmettre en mode d'émission.

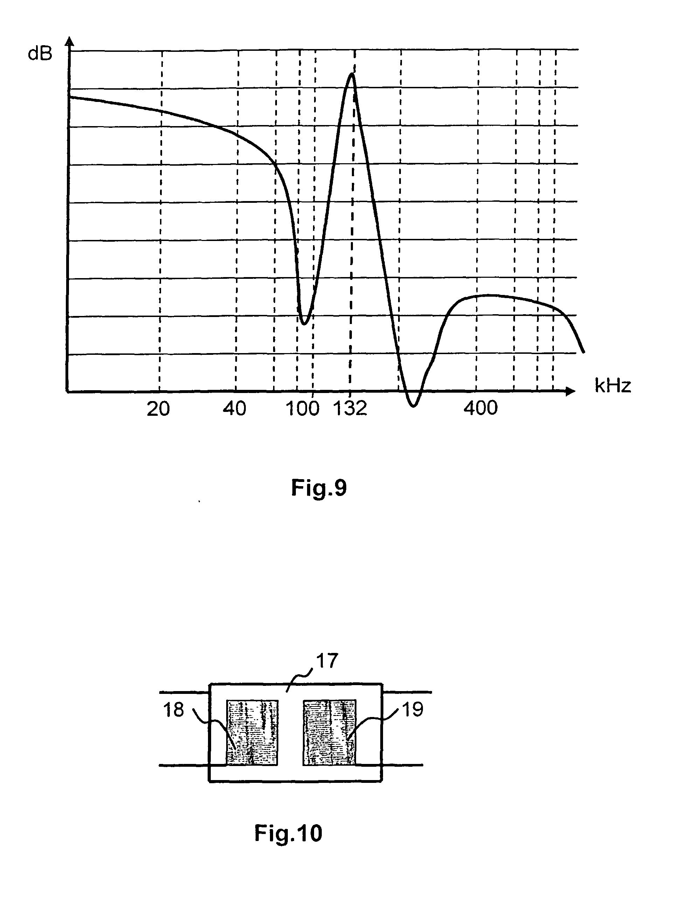

Le filtre sélectif 8 doit laisser passer les basses fréquences (autour de 50Hz) ainsi que la fréquence de découpage (49kHz) et les fréquences de la bande d'émission (autour de 132kHz). Dans un mode de réalisation préférentiel représenté à la figure 8 et dont la réponse en fréquence est illustrée à la figure 9, le filtre sélectif 8 n'atténue pas les fréquences inférieures ou égales à la fréquence de découpage (49kHz) et présente une résonance centrée sur la fréquence de la porteuse (132kHz). Il présente, par contre, une atténuation très forte des fréquences supérieures à 150kHz (limite supérieure de la bande utile autorisée en Europe pour les transmissions à courant porteur bas débit). La fréquence de découpage en mode veille a été choisie de manière à éviter de polluer le réseau avec l'oscillateur 13 et de manière à ce que son harmonique 3 (147kHz) soit inférieur à 150kHz et ne se trouve pas dans la bande utile du signal et soit atténuée par le filtre sélectif.

Le filtre de la figure 8 comporte en série une résistance R₂, un condensateur C₄, un circuit comportant en parallèle une inductance L₁ et un condensateur C₅, une inductance L₂ et un circuit comportant en parallèle une résistance R₃ et un circuit série constitué par un condensateur C₆ et une impédance L₃. A titre d'exemple, la réponse de la figure 9 correspond à un filtre dans lequel :
R₂ = 25 Ohms
C₄=1µF
L₁=L₂=220µ H
C₅=15µF
C₆=47nF
L₃=8,2µH
R₃=100 Ohms

L'invention n'est pas limitée au mode de réalisation préférentiel décrit ci-dessus. En particulier les informations peuvent être modulées en fréquence ou par tout autre type de modulation approprié, en particulier en phase ou avec une modulation complexe, en amplitude et en phase, de type QPSK par exemple.

Le transformateur T₂ peut être un transformateur classique. Il peut également être remplacé par un transformateur piézoélectrique. Un tel transformateur, illustré à la figure 10, comporte un support 17 en céramique et des première et seconde zone métallisées (18, 19), séparées, constituant respectivement le primaire et le secondaire du transformateur.

Dans tous les cas, l'invention permet d'optimiser l'encombrement et le coût d'un dispositif de couplage pour un système de transmission à courant porteur à bas débit, tout en assurant une isolation galvanique élevée avec le réseau, en supprimant un des transformateurs utilisé jusqu'ici dans les dispositifs de couplage connus, le transformateur T₂ assurant à la fois la fonction d'alimentation et la fonction de couplage pour l'émission et la réception d'informations.

L'interrupteur bidirectionnel 9 peut, par exemple, être constitué par un transistor de type MOSFET monté dans un pont de diodes rapides ou par deux transistors de type MOSFET ou IGBT monté tête-bêche.

## Revendications

1. Dispositif de couplage pour un système de transmission à courant porteur à bas débit, comportant un circuit de contrôle (10), des moyens d'alimentation du circuit de contrôle par un réseau alternatif de distribution électrique (P, N) et des moyens de couplage du circuit de contrôle au réseau pour l'émission et la réception d'informations modulées transmises par courant porteur sur le réseau, les moyens d'alimentation comportant un transformateur (T₂) ayant un primaire connecté au réseau et un secondaire connecté au dispositif de contrôle, dispositif **caractérisé en ce que** les moyens d'alimentation comportent un interrupteur bidirectionnel (9) connecté en série avec le primaire, le circuit de contrôle comportant des moyens de détection de présence d'une porteuse connectés aux bornes du secondaire, le dispositif comportant un optocoupleur (12) contrôlant l'interrupteur bidirectionnel (9) et un commutateur (11) à trois positions, commandé par le circuit de contrôle (10), le commutateur ayant une sortie connectée à une entrée de commande de l'optocoupleur (12), une première entrée, connectée à une sortie d'un oscillateur (13), une seconde entrée, connectée à une sortie d'émission du circuit de contrôle (10), et une troisième entrée, connectée à une sortie, de tension continue prédéterminée (V), des moyens d'alimentation, la sortie du commutateur (11) étant connectée à la première entrée en mode de veille, de manière à définir une fréquence de découpage prédéterminée des moyens d'alimentation, à la seconde entrée en mode d'émission, de manière à moduler les informations à transmettre, et à la troisième entrée en mode de réception, lorsque le circuit de contrôle a détecté la présence d'une porteuse en mode de veille.

2. Dispositif selon la revendication 1, **caractérisé en ce que** les moyens d'alimentation comportent une résistance de limitation (R₁) et un condensateur (C₃) en série avec l'enroulement primaire.

3. Dispositif selon l'une quelconque des revendications 1 à 2, **caractérisé en ce que** la fréquence de découpage est de l'ordre de 49kHz

4. Dispositif selon l'une quelconque des revendications 1 à 3, **caractérisé en ce que** les informations sont modulées avec une fréquence de porteuse de l'ordre de 132kHz

5. Dispositif selon l'une quelconque des revendications 1 à 4, **caractérisé en ce que** le transformateur est un transformateur piézoélectrique comportant un support en céramique (17) sur lequel sont formées des première et seconde zones métallisées (18, 19), séparées, constituant respectivement le primaire et le secondaire du transformateur.

## Claims

1. A coupling device for a low-rate carrier current transmission system, comprising a control circuit (10), means for supplying power to the control circuit via an AC electric power distribution system (P, N) and means for coupling the control circuit to the electric power system for transmission and receipt of modulated data transmitted by carrier current over the power distribution system, the power supply means comprising a transformer (T₂) having a primary winding connected to the power distribution system and a secondary winding connected to the control device, a device **characterized in that** the power supply means comprise a bidirectional switch (9) connected in series with the primary winding, the control circuit comprising means for detecting the presence of a carrier connected to the terminals of the secondary winding, the device comprising an opto-coupler (12) controlling the bidirectional switch (9) and a three-position selector switch (11) controlled by the control circuit (10), the selector switch having an output connected to a control input of the opto-coupler (12), a first input connected to an output of an oscillator (13), a second input connected to a transmission output of the control circuit (10), and a third input connected to an output of preset DC voltage (V) of the power supply means, the output of the selector switch (11) being connected to the first input in standby mode so as to define a preset switching frequency of the power supply means, to the second input in transmission mode so as to modulate the data to be transmitted, and to the third input in receipt mode when the control circuit has detected the presence of a carrier in standby mode.

2. The device according to claim 1, **characterized in that** the power supply means comprise a limiting resistor (R₁) and a capacitor (C₃) in series with the primary winding.

3. The device according to either one of claims 1 to 2, **characterized in that** the switching frequency is about 49 kHz

4. The device according to any one of claims 1 to 3, **characterized in that** the data is modulated with a carrier frequency of about 132 kHz

5. The device according to any one of claims 1 to 4, **characterized in that** the transformer is a piezoelectric transformer comprising a ceramic support (17) on which separate first and second metallized zones (18, 19) respectively constituting the primary and secondary winding of the transformer are formed.

## Patentansprüche

1. Kopplungseinrichtung für ein Übertragungssystem mit einem Trägerstrom niedriger Datenübertragungsrate, welche Einrichtung eine Steuerschaltung (10), Stromversorgungsmittel zur Einspeisung der Steuerschaltung aus einem elektrischen Wechselstrom-Verteilernetz (P, N) sowie Kopplungsmittel zur Kopplung der Steuerschaltung mit dem Netz umfasst, um durch Trägerströme über das Netz übertragene, modulierte Daten auszusenden und zu empfangen, wobei die Stromversorgungsmittel einen Transformator (T₂) mit einer an das Netz angeschlossenen Primärwicklung und einer an die Steuereinrichtung angeschlossenen Sekundärwicklung umfassen, **dadurch gekennzeichnet, dass** die Stromversorgungsmittel einen in Reihe zur Primärwicklung geschalteten bidirektionalen Schalter (9) umfassen, die Steuerschaltung an die Klemmen der Sekundärwicklung angeschlossene Mittel zum Nachweis einer Trägerwelle umfasst und die Einrichtung einen den bidirektionalen Schalter (9) ansteuernden Optokoppler (12) sowie einen von der Steuerschaltung (10) gesteuerten Umschalter (11) mit drei Schaltstellungen umfasst, welcher Umschalter einen an einen Steuerausgang des Optokopplers (12) angeschlossenen Ausgang, einen an einen Ausgang eines Oszillators (13) angeschlossenen ersten Eingang, einen an einen Sendeausgang der Steuerschaltung (10) angeschlossenen zweiten Eingang sowie einen dritten Eingang aufweist, der an einen, eine bestimmte Gleichspannung (V) führenden Ausgang der Stromversorgungsmittel angeschlossen ist, wobei der Ausgang des Umschalters (11) im Bereitschaftsmodus mit dem ersten Eingang verbunden ist, um so eine bestimmte Ansteuerfrequenz der Stromversorgungsmittel zu definieren, im Sendemodus mit dem zweiten Eingang verbunden ist, um so die zu übertragenden Daten zu modulieren, und im Empfangsmodus, wenn die Steuerschaltung im Bereitschaftsmodus das Vorhandensein einer Trägerwelle erkannt hat, mit dem dritten Eingang verbunden ist.

2. Einrichtung nach Anspruch 1, **dadurch gekennzeichnet, dass** die Stromversorgungsmittel einen Begrenzungswiderstand (R₁) und einen Kondensator (C₃) umfassen, die in Reihe zur Primärwicklung geschaltet sind.

3. Einrichtung nach irgendeinem der Ansprüche 1 bis 2, **dadurch gekennzeichnet, dass** die Ansteuerfrequenz etwa 49 kHz beträgt.

4. Einrichtung nach irgendeinem der Ansprüche 1 bis 3, **dadurch gekennzeichnet, dass** die Daten mit einer Trägerfrequenz von etwa 132 kHz moduliert werden.

5. Einrichtung nach irgendeinem der Ansprüche 1 bis 4, **dadurch gekennzeichnet, dass** der Transformator als piezoelektrischer Transformator ausgebildet ist, der einen Keramikträger (17) mit einem darin ausgebildeten ersten und zweiten metallisierten Bereich (18, 19) umfasst, wobei die genannten Bereiche voneinander getrennt sind und jeweils die Primärwicklung bzw. die Sekundärwicklung des Transformators bilden.
